# EUROPÄISCHE PATENTSCHRIFT

(11) **EP 1 799 505 B1**
(45) Veröffentlichungstag und Bekanntmachung des Hinweises auf die Patenterteilung: **08.07.2009**
(21) Anmeldenummer: 05794793.9
(22) Anmeldetag: 06.10.2005
(51) Int. Cl.: B60N 2/48, B60N 2/427, B60N 2/42

(54) **AKTUIERUNGSMITTEL FÜR EINE CRASH-AKTIVE KOPFSTÜTZE**
ACTUATING ELEMENT FOR A CRASH-ACTIVE HEAD REST
ELEMENT D'ACTIONNEMENT D'UN APPUIE-TETE ACTIF EN CAS DE COLLISION

(30) Priorität: 06.10.2004 DE 102004048910
(43) Veröffentlichungstag der Anmeldung: 27.06.2007
(73) Patentinhaber: Johnson Controls GmbH, 51399 Burscheid (DE)
(72) Erfinder: HARTLAUB, Silvio, 50259 Pulheim- Sinnersdorf (DE)
(74) Vertreter: Wolff, Felix
(86) Internationale Anmeldenummer: PCT/EP2005/055053
(87) Internationale Veröffentlichungsnummer: WO 2006/037801

(56) Entgegenhaltungen:
- DE-A1- 10 041 528
- DE-A1- 19 738 201
- DE-C1- 10 232 017
- US-A1- 2004 155 496
- US-B1- 6 749 256

## Beschreibung

Die vorliegend Erfindung betrifft ein Aktuierungsmittel, mit dem die Lage von einem Bauteil direkt oder indirekt veränderbar ist.

Derartige Mittel sind hinlänglich beispielsweise als Bowdenzüge bekannt und werden u. a. zur Aktuierung von Kopfstützen bei einem Rückaufprall eingesetzt. Ein derartiges System ist beispielsweise in der DE 100 41 528 A1 beschrieben, das jedoch den Nachteil aufweist, dass das Aktuierungsmittel auf Zug belastet ist. Derartige Aktuierungsmittel weisen, insbesondere unmittelbar nach dem Crash, eine vergleichsweise geringe Aktuierung auf, obwohl insbesondere zu diesem Zeitpunkt eine möglichst große Aktuierung gewünscht ist. Weiterer relevanter Stand der Technik sind die US,2004/0155496 A1, und die DE 102 32 017 C1.

Es war deshalb die Aufgabe der vorliegenden Erfindung, einen sitz mit einem Aktuierungsmittel zur Verfügung zu stellen, das die Nachteile des Standes der Technik nicht aufweist.

Gelöst wird die Aufgabe mit einem Sitz gemäß Patentanspruch 1.

Es war für den Fachmann überaus erstaunlich und nicht zu erwarten, dass der erfindungsgemäße sitz mit dem Aktuierungsmittel, insbesondere unmittelbar nach einer Krafteinwirkung, beispielsweise durch einen Rückaufprall, eine sehr gute Aktuierung aufweist, so dass beispielsweise eine Kopfstütze sehr schnell in Richtung des Kopfes des Insassen bewegt werden kann. Dadurch können Verletzungen der Insassen vermieden werden. Das erfindungsgemäße Aktuierungssystem ist einfach und kostengünstig herzustellen. Da das erfindungsgemäße Aktuierungssystem, beispielsweise bei einem Rückaufprall zusammengedrückt wird, werden Verletzungen des Beckenbodens weitgehend vermieden.

Erfindungsgemäß weist das Aktuierungsmittel des Sitzes Mittel auf, die eine Kraft von einer Antriebseinheit auf ein Bauteil direkt oder indirekt übertragen und dabei dessen Lage direkt oder indirekt verändern. Weiterhin erfindungsgemäß sind diese Mittel auf Druck belastet. Diese Mittel können jede dem Fachmann geläufige Ausgestaltung aufweisen. Erfindungsgemäß sind die Mittel jedoch so angeordnet, dass sich bei einer Kraftübertragung die Lage der Mittel so zueinander verändert, dass, bezogen auf die Längs- oder Querachse des Aktuierungsmittels, eine Längung erzielbar ist. Diese Längung wird auf einen Bowdenzug übertragen der die Verschiebung bzw. die daraus resultierende Kraft auf eine Kopfstütze, direkt oder indirekt überträgt. Es ist jedoch auch denkbar, dass das Aktuierungsmittel selbst Teil eines Bowdenzuges ist. In einer besonders bevorzugten Ausführungsform sind die Mittel Schenkel, die winklig zueinander angeordnet sind und die unter Krafteinwirkung gespreizt werden.

Das Aktuierungssystem ist Teil eines Sitzes eines Kraftfahrzeuges. Besonders bevorzugt ist es in der Rückenlehne eines Kraftfahrzeuges angeordnet.

Es war für den Fachmann überaus erstaunlich und nicht zu erwarten, dass mit dem erfindungsgemäßen Sitz Insassenverletzungen, insbesondere bei einem Rückaufprall, sehr effizient vermieden werden können, insbesondere dadurch, dass die Kopfstütze unmittelbar nach dem Aufprall sehr schnell in ihrer Lage in Richtung des Kopfes des Insassen verändert wird, so dass Verletzungen, insbesondere im Nackenwirbelbereich, vermieden werden. Der erfindungsgemäße Sitz ist einfach und kostengünstig herzustellen.

Das Aktuierungsmittel verändert die Lage des Frontteils der Kopfstütze. Weiterhin bevorzugt erfolgt die Lageänderung direkt oder indirekt. Die Anderung der Lage der Kopfstütze erfolgt bei einem Rückaufprall.

Das Aktuierungsmittel wird von dem Fahrzeuginsassen betätigt. Diese Aktuierung erfolgt insbesondere dadurch, dass der Fahrzeuginsasse bei einem Rückaufprall in den Fahrzeugsitz gedrückt wird. Der dabei entstehende Impuls und die daraus resultierenden Kräfte werden dazu eingesetzt, das Aktuierungsmittel in seinem Querschnitt zu komprimieren. Die daraus resultierende Längenänderung des Aktuierungsmittels wird zur Bewegung der Kopfstütze oder Teile der Kopfstütze eingesetzt.

Des Aktuierungsmittel wirkt mit einem Bowdenzug zusammen oder ist Teil eines Bowdenzuges, mit dem die Kraft von dem Aktuierungsmittel zu der Kopfstütze geleitet wird, um deren Lage zumindestens teilweise zu verändern.

Im Folgenden wird die Erfindung anhand der Figuren 1 bis 3 erläutert. Diese Erläuterungen sind lediglich beispielhaft und schränken den allgemeinen Erfindungsgedanken nicht ein.
- **Figur 1**: zeigt einen Ausschnitt des erfindungsgemäßen Aktuierungsmittels,
- **Figur 2**: zeigt eine schematische Zeichnung des erfindungsgemäßen Sitzes und
- **Figur 3**: zeigt ein Detail des erfindungsgemäßen Sitzes gemäß Figur 2.

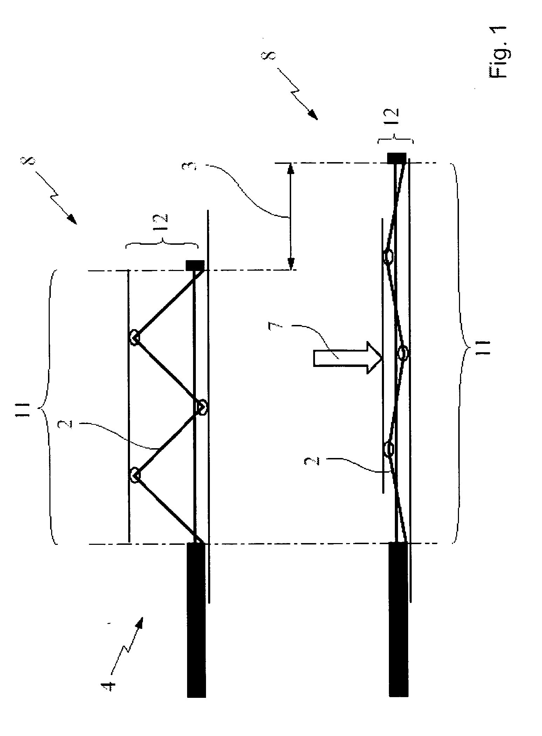

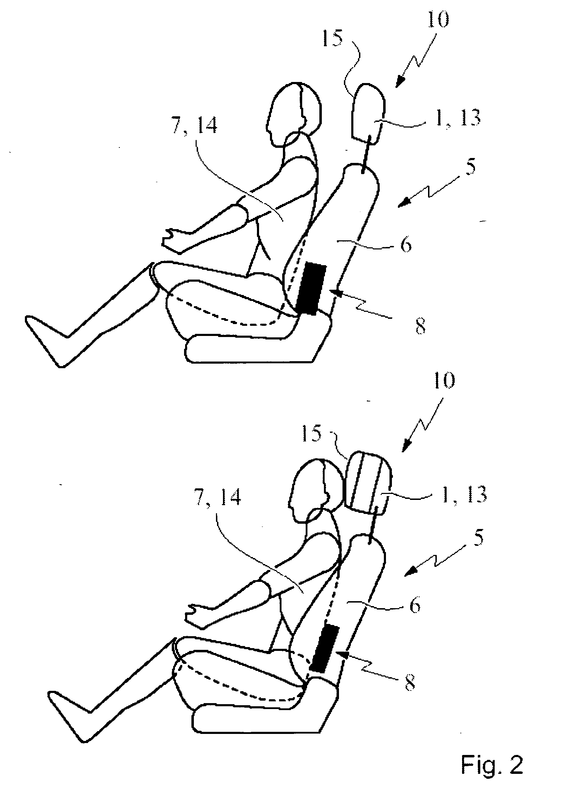

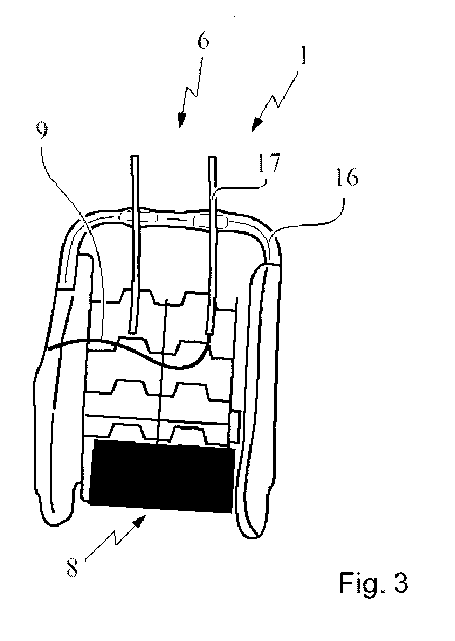

In **Figur 1** ist das erfindungsgemäße Aktuierungsmittel 8 dargestellt, wobei im oberen Teil der Figur die ursprüngliche Form, beispielweise vor einem Crash, und im unteren Teil der Figur die aktuierte Form des Aktuierungsmittels, beispielsweise während oder nach einem Crash dargestellt ist. Das Aktuierungsmittel 8 besteht in dem vorliegenden Fall aus vier Elementen 2, die winklig zueinander angeordnet sind. Unter Krafteinwirkung, die durch den Pfeil 7 symbolisiert ist, werden die Schenkel 2 des Aktuierungsmittels 8 gespreizt, so dass sich dessen Querschnitt 12 vermindert und es bezüglich seiner Querachse 11 eine Längung erfährt, die durch den Doppelpfeil 3 symbolisiert wird. Diese Längung wird an einen Bowdenzug übertragen, der wiederum ein Bauteil, beispielsweise eine Kopfstütze, in seiner Lage verändert, was detaillierter in den **Figuren 2** und **3** beschrieben ist. Der Fachmann erkennt, dass das erfindungsgemäße Aktuierungselement auch Teil eines Bowdenzuges sein kann. Weiterhin erkennt der Fachmann das die Aktuierung reversibel sein kann. In diesem Fall würde sich das Aktuierungselement, sobald die Kraft 3 nicht mehr anliegt, in seine ursprüngliche Form zurückbewegen.

**Figur 2** zeigt eine Ausführungsform des erfindungsgemäßen Autositzes 5, in dem sich ein Insasse in Form eines Dummys 14 befindet. Die obere Darstellung zeigt die Situation vor einem Unfall und die untere Figur die Situation nach oder während eines Unfalls, bei dem ein Fahrzeug von hinten auf das Automobil, in dem sich der dargestellte Sitz befindet, aufprallt. Der Sitz weist eine Rückenlehne 6 auf, in dem sich das Aktuierungsmittel 8 befindet. Im oberen Teil des Sitzes ist eine Kopfstütze 13 angeordnet, die einen dem Insassen zugewandten Frontteil 15 aufweist, der in seiner Lage in Richtung des Kopfes des Fahrzeuginsassen bewegbar ist. Es ist zu erkennen, dass während des Normalbetriebes des Kraftfahrzeugs (obere Darstellung) das Aktuierungsmittel einen vergleichsweise dicken Querschnitt aufweist und der Frontteil 15 der Kopfstütze einen vergleichsweise großen Abstand zu dem Kopf des Insassen aufweist. Bei einem Rückaufprall (untere Darstellung) wird der Insasse in den Fahrzeugsitz, insbesondere in die Rückenlehne hineingedrückt und komprimiert dadurch das Aktuierungselement 8, was wiederum wie bereits anhand von Figur 1 erläutert, zu einer Längung 3 des Aktuierungselementes führt. Diese Längung wird mit einem Bowdenzug (nicht dargestellt) in die Kopfstütze übertragen und führt dort zu einer Veränderung der Lage 10 des Frontteils 15 der Kopfstütze 13. Der Fachmann erkennt, dass der Frontteil 15 der Kopfstütze in Richtung des Insassen bewegt wird. Des weiteren erkennt der Fachmann, dass es auch möglich ist, nicht nur den Frontteil der Kopfstütze, sondern die Kopfstütze insgesamt zu bewegen. Die Lageveränderung des Frontteils der Kopfstütze kann direkt durch die von dem Aktuierungselement resultierenden Kraft - gegbenenfalls durch einen Bowdenzug übertragen - bewirkt werden. Es ist jedoch auch denkbar, dass das Aktuierungselement lediglich die Bewegung des Frontteils auslöst, indem beispielsweise ein Energiespeicher in Form einer Feder oder der Zünder eines Airbags betätigt wird.

In **Figur 3** ist ein Detail der Rücklehne 6 dargestellt. Das Aktuierungselement 6 ist zwischen den Schenkeln des Rahmens 16 der Rücklehne 6 angeordnet. Des weiteren ist zu erkennen, dass das Aktuierungselement 8 mit einem Bowdenzug 9 verbunden ist, der durch die Halterung 17 der Kopfstütze (nicht dargestellt) geführt wird, um in der Kopfstütze bei einem Rückaufprall eine Veränderung der Lage des Frontteils 15 der Kopfstütze zu bewirken.

### Bezugszeichenliste

- 1: Bauteil
- 2: Mittel
- 3: Längung
- 4: Position
- 5: Sitz
- 6: Rückenlehne
- 7: Antriebseinheit
- 8: Aktuierungsmittel
- 9: Bowdenzug
- 10: Lage des Bauteils, insbesondere einer Kopfstütze
- 11: Querachse
- 12: Querschnitt
- 13: Kopfstütze
- 14: Fahrzeuginsasse
- 15: Frontteil
- 16: Rahmen
- 17: Halterung der Kopfstütze

## Patentansprüche

1. Sitz mit einem Aktuierungsmittel (8), mit dem die Lage von einem Bauteil (1, 13) veränderbar ist, wobei das Aktuierungsmittel Mittel (2) aufweist, die bei einem Rückaufprall die von einem Fahrzeuginsassen wirkende Druckkraft auf das Bauteil (1) übertragen und dabei dessen Lage verändern, wobei das Bauteil (1, 13) ausschließlich das Frontteil (15) einer Kopfstütze (13) ist und zwischen dem Aktuierungsmittel (8) und dem Frontteil (15) der Kopfstütze ein Bowdenzug (9) angeordnet ist, **dadurch gekennzeichnet, dass** sich während der Kraftübertragung die Lage der Mittel (2) des Aktuierungsmittels so zueinander verändert, dass bezogen auf dessen Längsachse eine Längung (3) erzielbar ist.

2. Sitz nach Anspruch 1, **dadurch gekennzeichnet, dass** die Mittel (2) Schenkel sind, die von einer ursprünglichen Position (4) unter Krafteinwirkung gespreizt werden.

3. Sitz nach Anspruch 1 oder 2, **dadurch gekennzeichnet, dass** das Aktuierungsmittel in der Rücklehne (6) des Sitzes (5) angeordnet ist.

4. Sitz nach einem der voranstehenden Ansprüche, dass der Fahrzeuginsasse den Querschnitt (12) des Aktuierungsmittels komprimiert.

## Claims

1. Seat with an actuating means (8) with which the position of a component (1, 13) can be changed, the actuating means having means (2) which, in the event of a rear impact, transmit the compressive force acting from a vehicle occupant to the component (1) and, in the process, change the position thereof, the component (1, 13) exclusively being the front part (15) of a head restraint (13), and a Bowden cable (9) being arranged between the actuating means (8) and the front part of the head restraint, **characterized in that** the position of the means (2) of the actuating means with respect to one another changes during the transmission of force in such a manner that an extension (3) with respect to the longitudinal axis of said actuating means can be obtained.

2. Seat according to Claim 1, **characterized in that** the means (2) are limbs which are spread from an original position (4) under the action of force.

3. Seat according to Claim 1 or 2, **characterized in that** the actuating means is arranged in the back rest (6) of the seat (5).

4. Seat according to one of the preceding Claims, **characterized in that** the vehicle occupant compresses the cross section (12) of the actuating means.

## Revendications

1. Siège comprenant un moyen d'actionnement (8) avec lequel la position d'un composant (1, 13) peut être modifiée, le moyen d'actionnement présentant des moyens (2) qui, en cas de collision par l'arrière, transfèrent la pression exercée par un occupant du véhicule sur le composant (1) et modifient de ce fait sa position, le composant (1, 13) étant exclusivement la partie avant (15) d'un appuie-tête (13) et un câble Bowden (9) étant disposé entre le moyen d'actionnement (8) et la partie avant (15) de l'appuie-tête, **caractérisé en ce que** pendant le transfert, de force, la position des moyens (2) du moyen d'actionnement les uns par rapport aux autres est modifiée de telle sorte que l'on puisse obtenir un allongement (3) par rapport à son axe longitudinal.

2. Siège selon la revendication 1, **caractérisé en ce que** les moyens (2) sont des branches qui sont écartées d'une position initiale (4) sous l'application d'une force.

3. Siège selon la revendication 1 ou 2, **caractérisé en ce que** le moyen d'actionnement est disposé dans le dossier (6) du siège (5).

4. Siège selon l'une quelconque des revendications précédentes, **caractérisé en ce que** l'occupant du véhicule comprime la section transversale (12) du moyen d'actionnement.
